# EUROPEAN PATENT APPLICATION

(11) **EP 4 539 287 A1**
(43) Date of publication of application: **16.04.2025**
(21) Application number: 23203238.3
(22) Date of filing: 12.10.2023
(51) Int. Cl.: H02J 1/08, H02H 7/26, H02J 3/36, H01H 33/59

(54) **A DC SWITCH STATION**

(71) Applicant: Hitachi Energy Ltd, 8050 Zürich (CH)
(72) Inventor: Hafner, Ying-Jiang, 771 42 Ludvika (SE); Abdalrahman, Adil, 702 18 Örebro (SE); Kannan, Vinothkumar, 600128 Tamilnadu (IN)
(74) Representative: AWA Sweden AB

(57) **Abstract**

The present disclosure relates to a direct current switch station configured for a bipolar high voltage direct current system, the direct current switch station comprising common busbars of positive pole, negative pole and neutral, respectively, several sub-busbars of positive pole, several sub-busbars of negative pole, and several sub-busbars of neutral, wherein each sub-busbar of positive pole and negative pole is connected to its respective common busbar via a high-speed direct current circuit breaker with high current interrupting capability, and wherein each sub-busbar of positive pole and negative pole is connected to at least one high voltage direct current transmission medium via direct current switches having non-current interrupting capability, wherein each high voltage direct current transmission medium is further connected to a high voltage direct current converter station.

## Description

### TECHNICAL FIELD

The present disclosure relates to a direct current (DC) switch station configured for a bipolar high voltage direct current (HVDC) system.

### BACKGROUND

The increased global energy demands and the utilization of renewable energy generation have raised new requirements for the future electricity grid connection. The development of renewable energy and increasing the security of supply require large scale offshore and onshore network integration leading to transmit large amount of power over a long distance. HVDC becomes a more preferable choice in terms of transmitting a bulky amount of power over a long distance due to the transmission losses and smaller cable size for given power level when compared to traditional HVAC transmission system. A multi-terminal HVDC system (MTDC) using voltage source converter (VSC) technology has greater flexibility for large-scale renewable energy integration and transmission network connection due to its ability for independent power control of both active and reactive power, AC voltage support, and black-start capabilities. However, there is a major challenge as regards the protection of an MTDC system in the event of a fault at the DC side of the network including fault protection. The hybrid DC breakers have turned out to be useful in MTDC systems due to their low losses and high speed. In particular, they are used in DC switch stations where a terminal, including a VSC such as a multi-modular converter (MMC), is connected to two or more HVDC transmission mediums, such as overhead lines or cables, each having another terminal connected at a remote end of it, typically via another DC switch station. However, there is still a desire of finding the most appropriate way to build an MTDC system which is arranged for avoiding DC fault spread so that un-faulted parts can remain in operation.

### SUMMARY

The present disclosure seeks to, at least partly, remedy the above discussed issues. To achieve this, a direct current switch station, as defined by the independent claim, is provided. Embodiments thereof are provided in the dependent claims.

According to an aspect of the present disclosure, there is provided a DC switch station configured for a bipolar HVDC system, the DC switch station comprising common busbars of positive pole, negative pole and neutral, respectively, several sub-busbars of positive pole, several sub-busbars of negative pole, and several sub-busbars of neutral, wherein each sub-busbar of positive pole and negative pole is connected to its respective common busbar via a high-speed DC circuit breaker with high current interrupting capability, and wherein each sub-busbar of positive pole and negative pole is connected to at least one HVDC transmission medium via DC switches having non-current interrupting capability, wherein each HVDC transmission medium is further connected to an HVDC converter station. By this arrangement of busbars, sub-busbars, breakers and switches it is possible to quickly disconnect a faulty part of the system while letting the rest of the system continue to operate, and obtain this with a small number of breakers and switches. Additionally, the DC switch station can be considered to provide a radial grid of HVDC transmission mediums by the sub-busbars being connected to a common busbar, which offers a flexibility as to the number of converter stations which are interconnected in the radial grid.

It should be noted that the person skilled in the art would recognize the term "high-speed DC circuit breaker with high current interrupting capability" as a DC circuit breaker which is significantly fast and which is capable of breaking a DC current during full operation while an operational current, or even an extraordinary high fault current, is flowing through it. Further, the person skilled in the art would recognize the term "DC switch having non-current interrupting capability" as a switch which is capable of opening when the current through it is approximately zero, i.e. zero or close to zero. Those breaker and switch terms are common within the present field of technology and the person skilled in the art is familiar with them. It is advantageous, inter alia, from a pespective of cost-effectiveness to be able to use such a DC switch having non-current interrupting capability instead of a high-speed DC circuit breaker with high current interrupting capability when possible.

According to an embodiment, each sub-bar of neutral is connected to the common busbar of neutral and to at least one high voltage direct current transmission medium via DC switches having non-current interrupting capability, wherein each HVDC transmission medium is further connected to an HVDC converter station.

According to an embodiment, the DC switch station further comprises a ground switch between each sub-bar of neutral and ground, and a ground switch between the common busbar of neutral and ground, wherein the ground switches are low-speed switches having limited current interrupting capability. The person skilled in the art would recognize the term "low-speed switch having limited current interrupting capability" as a switch which is slow compared to a high-speed switch and which is capable of opening at a modest current level, which is higher than approximately zero but significantly lower than the current at full operation. Although understood by the person skilled in the art, as merely a non-limiting example, the top magnitude of the current at which the "low-speed switch having limited current interrupting capability" is capable of open may be about 2 kA to 5 kA. In comparison the "high-speed DC circuit breaker with high current interrupting capability" may be capable of open at magnitudes above 10 kA.

According to an embodiment, the ground switches comprise resonance circuits.

According to an embodiment, the DC switches between each sub-busbar of positive or negative pole and the respective HVDC transmission medium comprises two series connected switches, and a resistor connected in parallel with one of the series connected switches.

According to an embodiment, the high-speed DC circuit breaker is a hybride direct current breaker.

According to an embodiment, each common busbar may be connected, via a high-speed direct current circuit breaker, to a further HVDC transmission medium, which in turn is connected with a corresponding common busbar of another direct current switch station.

Other objectives, features and advantages of the disclosed embodiments will be apparent from the following detailed disclosure as well as from the drawings.

It is noted that embodiments of the present disclosure relate to all possible combinations of features recited in the claims. Further, it will be appreciated that the various embodiments described for the system as defined in accordance with the first aspect and the embodiments described for the method according to the second aspect are all combinable with each other.

### BRIEF DESCRIPTION OF THE DRAWINGS

This and other aspects of the present disclosure will now be described in more detail, with reference to the appended drawings showing embodiments of the disclosure.
Figure 1 is a block diagram of a switch arrangement at a pole of an embodiment of a DC switch station according to the present disclosure.
Figure 2 is a block diagram of a switch arrangement at the neutral of an embodiment of a DC switch station according to the present disclosure.
Figure 3 is a block diagram of an HVDC converter station.
Figure 4 is a block diagram of two interconnected DC switch stations.
Figure 5 is a block diagram of a portion of an HVDC system.

### DETAILED DESCRIPTION

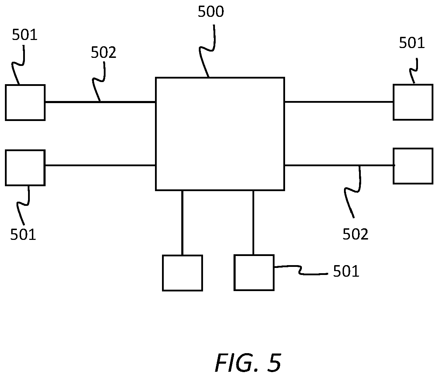

According to the present disclosure, the DC switch station is configured for a bipolar HVDC system and comprises a common busbar of positive pole, a common busbar of negative pole, a common busbar of neutral, several sub-busbars of positive pole, several sub-busbars of negative pole, and several sub-busbars of neutral. A general structure, on a most schematic level, of a portion of the bipolar HVDC system is shown in Figure 5, and comprises a DC switch station 500, converter stations 501 and HVDC transmission mediums. The DC switch station 500 is connected with the converter stations 501 via the HVDC transmission mediums 502.

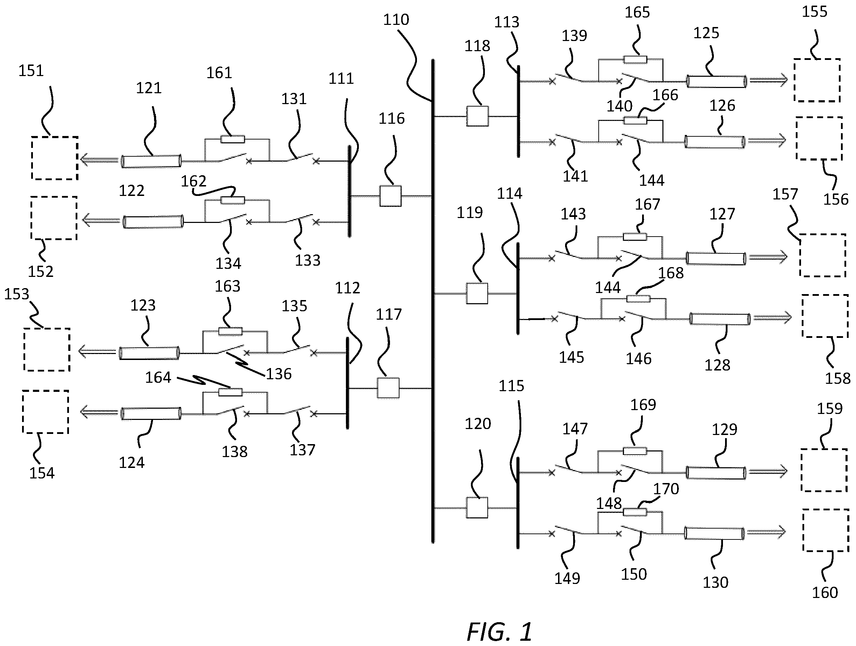

According to an embodiment, the DC switch station comprises, at the positive pole, and at the negative pole, as shown in Figure 1, a common busbar of pole 110, i.e. either positive pole or negative pole, and several sub-busbars 111-115, in the illustrated example five sub-busbars, which are each connected to the common busbar of pole 110 via a respective high-speed DC circuit breaker 116-120. Thus, the block diagram of Figure 1 is valid for both the positive pole and the negative pole. The high-speed DC circuit breakers 116-120 may be hybrid DC breakers or some other kind of DC circuit breakers having the capability of interrupting a high current at a high speed, i.e. within a short time from being commanded to open. As an example, an opening time for a hybrid DC breaker may be about 3 ms or less.

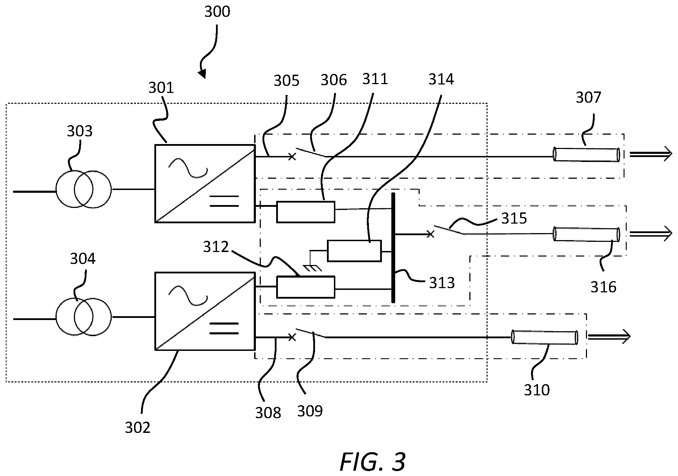

Each sub-busbar 111-115 may be connected to at least one HVDC transmission medium 121-130 via DC switches 131-150 having non-current interrupting capability. The transmission medium 121-130 may be, for example, an overhead transmission line or a cable. In this embodiment each sub-busbar 111-115 is connected to two HVDC transmission mediums 121-130. Each HVDC transmission medium 121-130 may further be connected to an HVDC converter station 151-160. The HVDC converter station 151-160 may also be called an HVDC terminal, and an example thereof will be briefly described below with reference to Figure 3. Generally, a core part of the converter station may comprise two converters, each having an alternating current (AC) side and a DC side. The AC sides are connected to the same alternating current (AC) grid or AC generator, such as, for instance, a renewable energy source, or to two different AC grids/generators. The DC sides are connected to a respective one of the positive and negative poles and in common to the neutral.

The DC switches 131-150 between each sub-busbar 111-115 of positive or negative pole and the respective HVDC transmission medium may comprise two series connected switches 131 and 132, 133 and 134, etc., and a resistor 161-170 connected in parallel with one of the series connected direct current switches 132, 134, ..., 150.

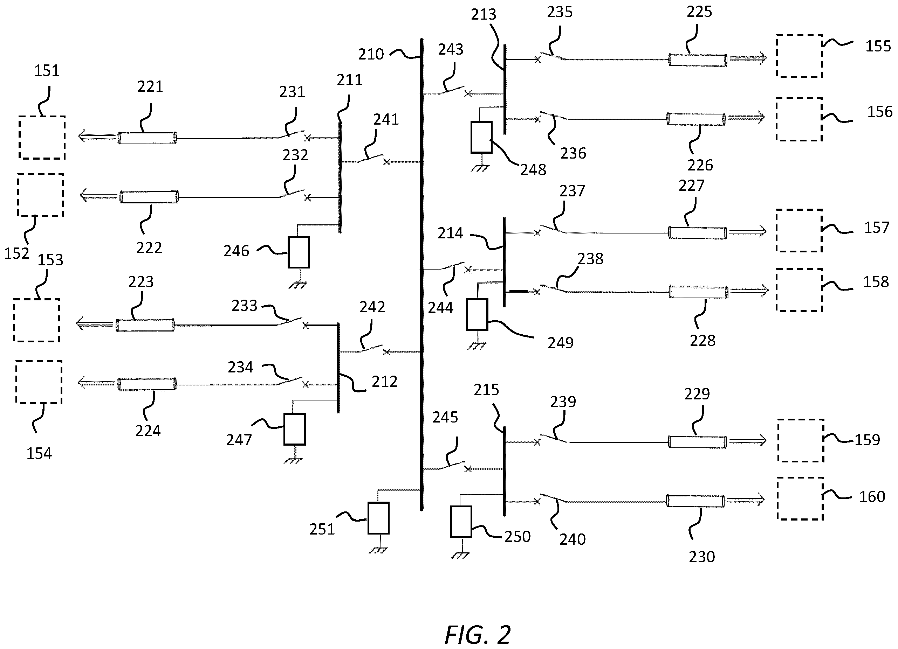

Turning now to the neutral portion of the DC switch station, as illustrated in Figure 2, each sub-bar of neutral 211-215 may be connected to the common busbar of neutral 210 and to at least one HVDC transmission medium 221-230 via DC switches 231-245 having non-current interrupting capability, wherein each HVDC transmission medium 221-230 may further be connected to an HVDC converter station 151-160. In Figure 2 the converter stations 151-160 are given the same reference numerals as the converter stations 151-160 in Figure 1, simply because they are the same.

Furthermore, a ground switch 246-250 may be connected between each sub-bar of neutral 211-215 and ground, and a further ground switch may be connected between the common busbar of neutral 210 and ground. The ground switches are low-speed switches having limited current interrupting capability. The internal structure of the ground switch 246-250 comprises a resonance circuit, which enables the ground switch 246-250 to interrupt a current of a certain magnitude.

With the above exemplified switch and busbar arrangements a competent AC switch station has been obtained. For instance, the high-speed DC breakers 116-120 between the common busbars 110 of positive and negative pole enables a faulted part to be quickly separated at the occurrence of any disturbance, thereby avoiding propagation of the disturbance to other parts of the HVDC system. Further, the DC switch station provides for a capability of performing maintenance of individual sections of the bipolar HVDC system without affecting the rest of the bipolar HVDC system. During full operation all breakers and switches, except the ground switches, are closed. Consider one of the converter stations 151, which is connected via the HVDC transmission mediums 121, 221 to the sub-busbars 116 of positive pole, negative pole, and neutral, respectively. In order to perform maintenance on the converter station 151, the active power and the reactive power of the converter station is reduced to zero, the converter station is blocked, and then the switches 131, 161, 231 between the respective HVDC transmission medium and sub-busbar are opened to shut down this part of the HVDC system. After maintenance work, this part can be reconnected without affecting the operation in the rest of the DC grid.

Depending on how the converter stations 151-160 are connected at the AC side they may be energized from the AC side or from the DC side. For instance, if the converter station 151 is going to be energized from the DC side, then for both the positive pole and the negative pole the DC switch 132 having the resistor 161 in parallel is opened, and its series-connected DC switch 131 is closed. When the converter station 151 has been energized then the first-mentioned DC switch 132 is closed and the converter station 151 can be deblocked and begin its normal operation.

Furthermore, the present DC switch station allows for switching parts of the HVDC system to operate in a point-to-point configuration. For instance, by opening, for the positive and negative poles, the DC breaker 116 between the common busbar 110 and the sub-busbar 111, opening, for the neutral, the DC switch 241 between the common busbar 210 and the sub-busbar 211, and closing the ground switch 246 between the sub-busbar 211 of neutral and ground, the converter stations 151, 152 connected to those sub-busbars 111, 211 becomes interconnected point-to-point.

Referring now to Figure 3, according to an example of a converter station 300 it comprises first and second converters 301, 302, each having an AC side and a DC side. The converter station 300 further comprises two AC transformers 303, 304, connected to a respective one of the first and second converters 301, 302. The first converter 301 has a connection of positive pole 305, connected via a DC switch 306 to an HVDC transmission medium 307. Similarly, the second converter 302 has a connection of negative pole 308, connected via a DC switch 309 to an HVDC transmission medium 310. Further, the first and second converters 301, 302 each has a connection of neutral connected via a neutral bus switch 311, 312 to a common neutral busbar 313, which in turn is grounded via a ground switch 314. The common neutral busbar 313 is connected, via a DC switch 315 to an HVDC transmission medium 316.

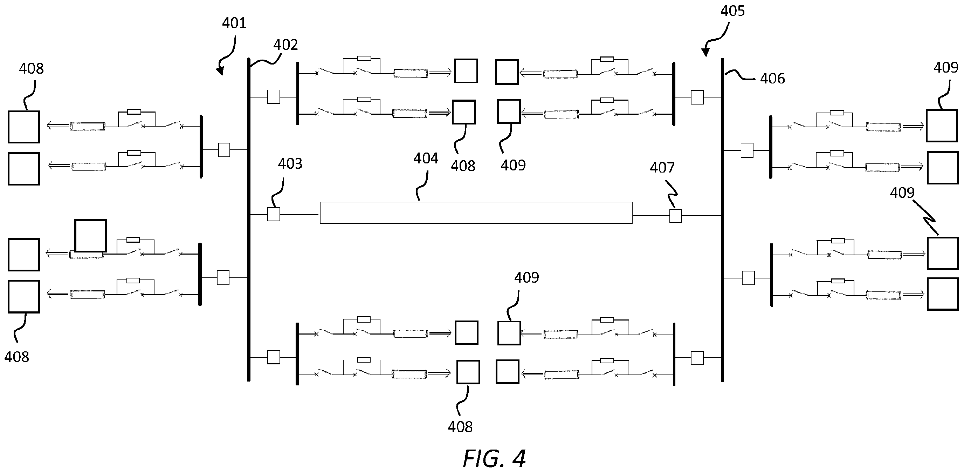

Further, two or more DC switch stations may be interconnected, as shown in Figure 4, to form an even larger DC grid. The DC switch station arrangement at positive and negative pole 401 of a first DC switch station has a common busbar 402, which is connected via a DC breaker 403 to an HVDC transmission medium 404. The DC switch station arrangement at positive and negative pole 405 of a second DC switch station has a common busbar 406, which is connected via another DC breaker 407 to the same HVDC transmission medium 404. The first DC switch station is connected with first converter stations 408., and the second DC switch station is connected with second converter stations 409. For reasons of simplicity only some of the first and second converter stations 408, 409, and only some of the other elements as well, have been provided with reference numerals in Figure 4.

While the present disclosure has been illustrated and described in detail in the drawings and foregoing description, such illustration and description are to be considered illustrative or exemplary and not restrictive.

Although features and elements are described above in particular combinations, each feature or element can be used alone without the other features and elements or in various combinations with or without other features and elements.

Other variations to the disclosed embodiments can be understood and effected by those skilled in the art in practicing the present disclosure, from a study of the drawings, the description, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain features are recited in mutually different dependent claims does not indicate that a combination of these features cannot be used to advantage. Any reference signs in the claims should not be construed as limiting the scope.

## Claims

1. A direct current switch station configured for a bipolar high voltage direct current system, the direct current switch station comprising common busbars of positive pole, negative pole and neutral, respectively, several sub-busbars of positive pole, several sub-busbars of negative pole, and several sub-busbars of neutral, wherein each sub-busbar of positive pole and negative pole is connected to its respective common busbar via a high-speed direct current circuit breaker with high current interrupting capability, and wherein each sub-busbar of positive pole and negative pole is connected to at least one high voltage direct current transmission medium via direct current switches having non-current interrupting capability, wherein each high voltage direct current transmission medium is further connected to a high voltage direct current converter station.

2. The direct current switch station according to claim 1, wherein each sub-bar of neutral is connected to the common busbar of neutral and to at least one high voltage direct current transmission medium via direct current switches having non-current interrupting capability, wherein each hvdc transmission medium is further connected to an hvdc converter.

3. The direct current switch station according to any one of the preceding claims, further comprising a ground switch between each sub-bar of neutral and ground, and a ground switch between the common busbar of neutral and ground, wherein the ground switches are low-speed switches having limited current interrupting capability.

4. The direct current switch station according to claim 3, wherein the ground switches comprise resonance circuits.

5. The direct current switch station according to any one of the preceding claims, wherein the direct current switches between each sub-busbar of positive or negative pole and the respective high voltage direct current transmission medium comprises two series connected direct current switches, and a resistor connected in parallel with one of the series connected direct current switches.

6. The direct current switch station according to any one of the preceding claims, wherein the high-speed DC circuit breaker is a hybride direct current breaker.

7. The direct current switch station according to any one of the preceding claims, wherein each common busbar is connected, via a high-speed direct current circuit breaker, to a further HVDC transmission medium, which in turn is connected with a corresponding common busbar of another direct current switch station.
